Europäisches Patentamt

**European Patent Office**

Office européen des brevets

(11) Publication number : **0 551 137 A1**

(12) **EUROPEAN PATENT APPLICATION**

(21) Application number : **93100285.1**

(22) Date of filing : **11.01.93**

(51) Int. Cl.⁵ : **G02F 1/17**

(30) Priority : **10.01.92 KR 25992**
**01.07.92 KR 1165992**

(43) Date of publication of application :
**14.07.93 Bulletin 93/28**

(84) Designated Contracting States :
**BE DE FR GB IT**

(71) Applicant : **HANKUK GLASS INDUSTRIES, INC.**
**45-1, Youido-Dong, Youngdeungpo-ku**
**Seoul (KR)**

(72) Inventor : **LEE, Jeong Hoon**
**Shinsikaji Apt. 132-902 Mok-Dong**
**Yangchon-Ku**
**Seoul (KR)**
Inventor : **YU, Byung Seok**
**Woosung Apt. 108-1410, 294 Sankok-2 Dong**
**Puk-Ku Inchon (KR)**
Inventor : **LEE, Young Woo**
**373-14, Kosaek-Dong Kwonsun-Ku Suwon**
**Kyungki (KR)**

(74) Representative : **Patentanwälte Beetz - Timpe - Siegfried - Schmitt-Fumian- Mayr**
**Steinsdorfstrasse 10**
**W-8000 München 22 (DE)**

(54) **Light-polarizing liquid suspension, and method for making the liquid suspension.**

(57)   A preferred light-polarizing suspension for a film-type light valve comprises 1 to 20 mass-% of light-polarizing particles in a suspending medium. The difference between the refractive indices of the suspension and of a polymeric matrix does not exceed 0.02.

EP 0 551 137 A1

## Technical Field

The present invention relates to a light-polarizing liquid suspension. More particularly, it relates to a light-polarizing liquid suspension for a film-type light valve. It also relates to a process for manufacturing such a light-polarizing liquid suspension.

## Background Art

A light valve was invented and patented by Edwin H. Land (U.S. Patent Nos. 1,951,664 and 1,955,923). Land's light valve is a cell comprising two substrates, with at least one of them being transparent. The substrates bear electrodes, usually in the form of a transparent conductive oxide (TCO) coating. The substrates, which form the walls of the cell, are spaced a small distance apart. The cell contains a suspension of small particles in a liquid suspending medium. In the absence of an applied electric field, the particles in the liquid suspension exhibit random Brownian motion, and a beam of light passing into the cell is reflected, transmitted or absorbed depending upon the nature and concentration of the particles and the energy content of the light. When an electric field is applied through the suspension, the particles become aligned parallel to the electric field, and most of the light can pass through the cell. Difficulties with these early light valves included particle settling, particle clustering, color change by heat, reduction of off-state optical density, and degradation by ultraviolet (UV) light, so that suspended-particle light valves have not heretofore been developed into practical commercial devices.

Some of these difficulties, such as particle settling, particle clustering, color change by heat, and reduction of off-state optical density have been solved by R.L. Saxe (U.S. Patent Nos. 3,756,700; 4,247,175; 4,273,422; 4,407,565; and 4,422,963), F.C. Lowell (U.S. Patent No. 3,912,365), and R.I. Thompson (U.S. Patent No. 4,078,856). Here, light valves contained a liquid suspension of solid particles of colloidal size, a polymeric system for helping to disperse the particles in the liquid, and a polymeric stabilizer. Mentioned difficulties were overcome by matching of the densities of suspended particles and suspending medium, and by adding the polymeric stabilizer.

However, with particles in liquid suspension, and when the vertical dimension of a cell is large, hydrostatic pressure of the liquid suspension causes a pressure difference between the upper and the lower of a cell. Resulting net outward forces on the substrates cause bowing and distortion of the substrates into non-planar surfaces. Bowing or distortion in turn leads to non-uniform suspension thickness and non-uniform optical density across the cell. Also, when such light valves are used as windows for buildings, a corresponding inward-bowing effect can result due to wind or difference in pressure between inside and outside a building. Other disadvantages are degradation due to UV-radiation, difficulties in filling or pouring the liquid suspension to a cell, agglomeration of particles in suspension, leaking of the suspension due to failure of a seal, and unequal response time and optical density due to a voltage drop from an edge to the middle of a TCO-substrate.

J. Fergason (U.S. Patent Nos. 4,435,047; 4,579,423; and 4,616,903) and J.L. West (U.S. Patent No. 4,685,771) invented films comprising microdroplets of a liquid-crystal material dispersed in a polymeric matrix. In these films, micron-size liquid-crystal droplets are dispersed in and surrounded by polymeric material. In the absence of an applied field, light passing through the film is strongly forward-scattered, giving the film a milky translucent appearance. When an electric field is applied, the liquid-crystal molecules become aligned and the film becomes transparent. Formation of uniform liquid-crystal droplets in a polymeric matrix can be achieved by one of a number of phase separation processes, involving, e.g., polymerization, thermal processing, solvent evaporation, or emulsifying.

The light valves invented by J. Fergason and J.L. West are milky translucent in the absence of an applied voltage. Their light scattering properties detract from their aesthetic appeal and thus limit their applicability to displays and windows. Furthermore, the liquid crystal partially interacts with the polymeric matrix, as a plasticizer and a mixture of several liquid-crystal materials is used. As a result, in the presence of an applied field, the transparent state remains milky because of a difference between the refractive indices of the liquid crystal and the polymeric matrix. Optical use as a light valve is limited to switching functions, between transparent and opaque states. Such a light valve can be used for curtainless windows and the like, but is not applicable for so-called smart windows, where continuous control of transmittance of solar radiation is required. Moreover, since liquid-crystal materials are affected by UV-radiation, a UV-blocking filter or UV-absorbing additive is necessary. Specifically with respect to nematic liquid-crystal materials, their applicability is limited because of temperature sensitivity.

## Summary of the Invention

It is an object of the present invention to provide a liquid polarizing suspension for a light-valve film with microdroplets and/or an interconnected structure of the liquid polarizing suspension, representing an improvement over known liquid polarizing suspensions and liquid crystals.

It is a further object of the present invention to provide a liquid suspension with light-polarizing particles which will not enter the polymeric matrix.

A preferred light-polarizing suspension comprises 1 to 20 mass-% of light-polarizing particles in a suspending medium. The suspension is dispersed in a polymeric matrix whose refractive index differs from the refractive index of the suspension by at most 0.02.

## Detailed Description of the Preferred Embodiments

Especially preferred for a light-polarizing suspension are 1 to 20 mass-% of light polarizing particles, 60 to 98 mass-% of suspending medium, and 1 to 20 mass-% of polymeric stabilizer or dispersing agent for keeping the particles suspended in a suspending medium.

Prior-art difficulties are alleviated forming a film comprising a liquid polarizing suspension dispersed in a polymeric matrix. In the absence of an AC-voltage applied to the film, particles in microdroplets and/or an interconnected structure of the liquid polarizing suspension exhibit random Brownian motion, and the film is dark blue due to the electro-dichroic effect of polarizing particles. When an AC-voltage is applied across the film, the particles in the liquid polarizing suspension become aligned parallel to the electric field, and, when the refractive indices of the polymeric matrix and the suspension are matched, the film becomes transparent. Preferred films are less prone to difficulties in filling or pouring the liquid suspension to a cell, agglomeration of particles in suspension, leaking of the suspension due to failure of a seal, and unequal response time and optical density due to a voltage drop from an edge to the middle of a TCO-substrate. A preferred suspension contains a fluoro-copolymer suspending medium, a polymeric stabilizer such as an acrylic copolymer, a UV-absorbing agent, and a dispersing agent. When a film is prepared from such a suspension by phase separation by polymerization, solvent evaporation, or thermal treatment, care is required to match the refractive indices of the liquid suspension and the polymeric matrix. Also, the particles should remain in the microdroplets segregated from the polymeric matrix, for proper alignment in an applied electric field. (When nitrocellulose was previously used in making the polarizing particles for good dispersion and for particle uniformity, light-polarizing particles could remain in the polymeric matrix because the polymer is almost compatible with nitrocellulose.)

Light-polarizing particles are formed as polyhalides by reaction of a precursor (pyrazine-2,3-dicarboxylic acid, pyrazine-2,5-dicarboxylic acid, pyridine-2,5-dicarboxylic acid, hydroxyquinoline, dihydrocinchonidine sulfate, or 2-hydroxypyridine) with hydrogen iodide and iodine in the presence of a protective material such as a copolymer and nitrocellulose.

Suitable light-polarizing particles are described in U.S. Patent Nos. 2,041,138; 2,306,108; 2,375,963; and 4,270,814 and in U.K. Patent No. 433,455. Described polyhalide particles are herapathite crystals formed by reaction of quinine bisulfate, iodine, and hydrogen iodide. Salts of other members of the quinine alkaloid family also form light-polarizing polyiodies by reaction, e.g., of dihydrocinchonidine sulfate with iodine and hydrogen iodide. Furthermore, polyhalides such as polyiodides, polychlorides and polybromides can be formed by reaction of pyrazine or pyridine carboxylic acid, hydrogen halide acid and/or alkali metal or alkaline earth metal halide with elemental iodine, chlorine, or bromine. A polyhalide is a complex of halide atoms and an inorganic or organic matrix. Methods for the manufacture of light-polarizing particles are described in detail in U.S. Patent No. 4,422,963 which disclose the use of polymeric materials such as nitrocellulose for uniform particle size and improved dispersion in a suspending medium. Since nitrocellulose is compatible with the polymeric matrix material, particles treated with nitrocellulose are not segregated to the microdroplets but may remain in the polymeric matrix. In accordance with an aspect of the invention, this drawback is overcome by use of a polymeric dispersant, e.g., poly(acrylic acid) or poly(2-hydroxyethyl methacrylate), which is incompatible or partially compatible with the polymeric matrix material. Particles treated with nitrocellulose can be segregated to the microdroplets by adding A-B-type block copolymer. This copolymer has to be soluble in the liquid suspending medium, incompatible or partially compatible with the polymeric matrix material, and inert with respect to the suspended particles and the suspending medium. The conductivity and viscosity of the liquid suspension should remain limited. In the present invention, preferred size of the light-polarizing particles is less than 1 um and preferably in a range from 0.1 to 0.3 um, and the particles should be shaped like needles, laths, rods, or plates. When particle size is greater than 1 um, a film may not be transparent even in the presence of a field, due to the electro-dichroic effect of particles in the polymeric matrix.

3

The polymeric stabilizer used in the present invention is A-B-type block copolymer. This copolymer has to be soluble in the liquid suspending medium, and to be incompatible or at most partially compatible with the polymeric matrix. the copolymer must be inert with respect to the suspended particles and the suspending medium, and its inclusion should not result in an overly conductive or viscous suspension. The A-B-type copolymers used in the present invention comprise a solvating or solubilizing component and an anchoring component, wherein the solvating or B-component of the block polymer is an organic group having sufficient branching to impart solubility, and wherein the second or A-segment of the block copolymer anchors to the surface of the light-polarizing particles or to another polymer on the surface of the particles. These requirements are satisfied by an A-B-type block copolymer such as poly(neopentyl methacrylate-block-hydroxyethyl methacrylate), poly(neopentyl methacrylate-block-styrene), or poly(acrylonitrile-block-styrene). Block copolymers are described in "Block Copolymers - Overview and Critical Survey", A. Noshay et al., Academic Press, New York, 1977, pp. 83-163 and in "Block and Graft Polymers", W.J. Burlant et al., Reinhold Publishing Corp., New York, 1960. In the present invention, the amount of the A-B-type block copolymer in the liquid polarizing suspension is below 10 mass-% and preferably in the range from 2 to 5 mass-%. Higher A-B block copolymer contents than specified here result in inordinately slow response and, when an applied field is weak, in inadequate transparency of the film. Also suitable as dispersant materials are oil-soluble phosphate salts of alkyl amines.

Suitable liquid suspending media are described in U.S. Patent Nos. 1,961,664; 2,290,582; 3,625,869; 4,247,175; and 4,442,019. Described there are a number of liquid suspension media, e.g., esters, oils, aromatic alcohols, and aromatic esters for suspending particles in light valves. In accordance with an aspect of the invention, the liquid suspending medium has to be incompatible or at most partially compatible with the polymeric matrix, and to be inert with respect to the suspended particles and the polymeric stabilizer. Also, the difference of refractive index between suspending medium and a polymeric matrix must not exceed 0.02. The suspending medium in the present invention is a plasticizer such as a phthalate (dioctyl phthalate, dibutyl phthalate, diisooctyl phthalate, butyloctyl phthalate), an isophthalate (dioctyl isophthalate), an oleate (butyl oleate, n-propyl oleate, etc.), an adipate (dioctyl adipate, etc.), or a benzoate (diethyl glycol dibenzoate, etc.). Plasticizers are described in "The Technology of Plasticizers", J.K. Sears et al., John Wiley & Sons, New York, 1982, pp. 966-1077. Table 1 shows properties and polymeric compatibilities of typical plasticizers used in the present invention.

The present invention provides a film of liquid suspension dispersed in a polymeric matrix which is conveniently fabricated and which does not suffer from sealing difficulties as in a conventional light valve. Formation of uniform liquid suspension droplets in a polymeric matrix is achieved by phase-separation processing, e.g., by polymerization, thermal processing, or solvent evaporation. Advantageously, use of these simple, inexpensive, one-step methods results in cost reduction in the fabrication of displays and windows.

Films of the present invention can be used for a large variety of applications, e.g., in automobile display devices, automobile windshields, automobile rear-view mirrors, windows for buildings, sunglasses, optical shutters, and flat-panel display devices.

Example 1.

An amount of 0.2 to 2 grams of light-polarizing particles was added to 8 to 9.8 grams of suspending medium consisting of 0.1 to 20 mass-% polymeric dispersant and 80 to 99.9 mass-% plasticizer. This solution was mixed by mechanical stirring for 30 minutes and by ultrasonic agitation for 2 hours. A stable light-polarizing suspension resulted. The electro-optical properties of such a suspension depend upon the particle content, the polymeric dispersant content, and the gap between electrodes.
At 100 volts RMS and 60 Hz, the rise time was from several milliseconds to several tens of milliseconds, and the decay time was from several tens of milliseconds to several seconds. The radiation transmittance was about 50 to 80% in the on-state and 0.5 to 20% in the off-state.

Example 2.

Processing was as in Example 1, with the polymeric dispersant being poly(acrylonitrile-block-styrene) and the suspending medium being butyloctyl phthalate having a refractive index of 1.485.

Examples 3-7.

Example 2 was followed, but with suspending media dicapryl phthalate, ditridecyl phthalate, diisodecyl phthalate, dimethyl phthalate, and dioctyl isophthalate having a refractive index of 1.48 to 1.49.

Examples 8-11.

Example 2 was followed, but with suspending media diisooctyl azelate, glycerol monooleate, methyl oleate, and ditridecyl adipate having a refractive index of 1.45 to 1.46.

Examples 12-21.

Processing was as in Example 1, with suspending media as in Examples 2-11, respectively, and with poly(neopentyl methacrylate-block-hydroxyethyl methacrylate) as polymeric dispersant.

Examples 22-31.

Processing was as in Example 1, with suspending media as in Examples 2-11, respectively, and with poly(neopentyl methacrylate-block-styrene) as polymeric dispersant.

Table 1.  Properties and Polymer Compatibility of Plasticizers
Used in the Present Invention.

| | Mol. Weight | Density (g/cm³) | refractive Index | bp(℃) Tm(℃) | PMMA | PVB | PVAc | CA | CAB | CN | EC |
|---|---|---|---|---|---|---|---|---|---|---|---|
| Dioctyl phthalate | 390 | 0.983 (25 ℃) | 1.485 (25 ℃) | 231( 5mm) / -46 | C | P | I | I | C | C | C |
| Butyl octyl phthalate | 334 | 0.993 (25 ℃) | 1.485 (25 ℃) | 340(740mm) / <-50 | P | P | I | I | P | C | C |
| Diisooctyl phthalate | 390 | 0.985 (23 ℃) | 1.485 (23 ℃) | 228-239 (5mm) / -50 | C | P | C | I | C | C | C |
| Dioctyl isophthalate | 391 | 0.984 (20 ℃) | 1.4875 (20 ℃) | 241(5mm) / -46 | P | C | I | I | C | C | C |
| Methyl oleate | 296 | 0.875 (25 ℃) | 1.4505 (25 ℃) | 167-170 ( 2mm) / -16 | P | P | P | I | P | C | C |
| Methyl ricinoleate | 310 | 0.925 (25 ℃) | 1.4620 (25 ℃) | 170(1mm) / -30 | P | C | C | P | C | C | C |
| Diisooctyl azelate | 413 | 0.92 (25 ℃) | 1.450 (25 ℃) | 225-244 (4mm) / -58 | - | I | P | C | C | C | C |
| Diethylene glycol dibenzoate | 314 | 1.178 (25 ℃) | 1.5424 (25 ℃) | 230-242 (5mm) / 16, 28 | C | C | C | P | C | C | C |
| Epoxidized soybean oil | 1000 | 1.02 (25 ℃) | 1.4720 (25 ℃) | / -4 | I | I | I | I | P | C | C |
| Dioctyl adipate | 371 | 0.927 (20 ℃) | 1.446 | 214(5mm) / -70 | P | P | P | P | C | C | C |
| Trioctyl trimellitate | 547 | 0.989 (20 ℃) | 1.4832 (23 ℃) | 260(1mm) / -38 | C | P | - | - | C | C | C |

C: compatible    P: partially compatible    I: incompatible

6

## Claims

1. A light-polarizing suspension dispersed in a polymeric matrix, comprising 1 to 20 mass-% of light-polarizing particles in a suspending medium, in which the difference in refractive index between the suspending medium and the polymeric matrix does not exceed 0.02, and in which the suspending medium is at most partially compatible with the polymeric matrix.

2. The light-polarizing suspension according to claim 1, further comprising a polymeric stabilizer or dispersing agent.

3. The light-polarizing suspension according to claim 1, wherein said light-polarizing particles are produced in the presence of a polymeric stabilizer or dispersing agent which is incompatible with the polymeric matrix.

4. The light-polarizing suspension according to claim 3, wherein said light-polarizing particles comprise a polymer which is compatible with the polymeric matrix, and wherein said light-polarizing particles are treated with a polymeric stabilizer or dispersant which is incompatible with the polymeric matrix.

5. The light-polarizing suspension according to claim 4, wherein said polymer is nitrocellulose.

6. The light-polarizing suspension according to claim 4, wherein said suspending medium includes at least one plasticizer selected from the group consisting of phthalic acid derivatives, isophthalic acid derivatives, oleic acid derivatives, ricinoleic acid derivatives, azelic acid derivatives, adipic acid derivatives, and benzoic acid derivatives.

7. The light-polarizing suspension according to claim 6, wherein said suspending medium includes at least one phthalic acid derivative selected from the group consisting of diisooctyl phthalate, dioctyl phthalate, and butyloctyl phthalate.

8. A method for making a light-polarizing liquid suspension for dispersion in a polymeric matrix, comprising mixing 1 to 20 mass-% of light-polarizing particles and 80-99 mass-% of a suspending medium, with the difference of refractive index between the suspending medium and the polymeric matrix not exceeding 0.02, and with the suspending medium being at most partially compatible with the polymeric matrix.

9. Light-polarizing suspension, obtainable by the method according to claim 8.

10. Use of the light-polarizing suspension according to one of claims 1 to 7 and 9 in a film-type light valve.

EP 0 551 137 A1

European Patent
Office

**EUROPEAN SEARCH REPORT**

Application Number

EP    93 10 0285

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-1 306 981 (HONEYWELL INC) * page 2, line 26 - page 3, line 34 * | 1-10 | G02F1/17 |
| Y | US-A-3 341 274 (A.MARKS) * column 6, line 62 - line 73; figure 6 * | 1-10 | |
| A,D | US-A-4 407 565 (R.SAXE) * column 6, line 33 - column 7, line 26 * | 2-7,9,10 | |
| A | GB-A-1 468 768 (NCR CORP) * page 2, line 55 - page 5, line 126 * | 1,8 | |

TECHNICAL FIELDS SEARCHED (Int. Cl.5)

G02F

The present search report has been drawn up for all claims

| Place of search | Date of completion of the search | Examiner |
|---|---|---|
| THE HAGUE | 19 APRIL 1993 | DIOT P.M. |